# FASCICULE DE BREVET EUROPEEN

(11) **EP 3 313 734 B1**
(45) Date de publication et mention de la délivrance du brevet: **26.09.2018**
(21) Numéro de dépôt: 16788161.4
(22) Date de dépôt: 30.09.2016
(51) Int. Cl.: B64G 1/10, B64G 1/64

(54) **SATELLITE À CORPS PRINCIPAL CYLINDRIQUE, EMPILEMENT COMPRENANT UN TEL SATELLITE ET ENSEMBLE DE LANCEMENT POUR UN TEL SATELLITE**
SATELLIT MIT ZYLINDRISCHEM HAUPTKÖRPER, STAPEL MIT SOLCH EINEM SATELLITEN UND STARTANORDNUNG FÜR SOLCH EINEN SATELLITEN
SATELLITE WITH CYLINDRICAL MAIN BODY, STACK COMPRISING SUCH A SATELLITE AND LAUNCH ASSEMBLY FOR SUCH A SATELLITE

(30) Priorité: 02.10.2015 FR 1559386
(43) Date de publication de la demande: 02.05.2018
(73) Titulaire: Airbus Defence and Space SAS, 31402 Toulouse Cedex 4 (FR)
(72) Inventeur: CHEYNET DE BEAUPRE, René, 31402 Toulouse (FR); PALAYRET, Francis, 31402 Toulouse (FR); BERTHEUX, Philippe, 31402 Toulouse (FR)
(74) Mandataire: Cabinet Plasseraud
(86) Numéro de dépôt international: PCT/FR2016/052507
(87) Numéro de publication internationale: WO 2017/055770

(56) Documents cités:
- EP-A1- 2 202 553
- EP-A2- 2 772 441
- FR-A1- 2 932 576
- US-A1- 2007 080 260
- US-A1- 2009 224 105
- US-A1- 2012 154 585
- US-A1- 2013 221 162

## Description

L'invention concerne le domaine des véhicules spatiaux, et plus particulièrement le domaine des satellites destinés à être mis en orbite.

Un satellite comprend classiquement un corps formant support pour les équipements du satellite. Les équipements peuvent être répartis en deux catégories. La première catégorie est appelée la charge utile et comprend l'instrument principal de la mission ainsi que les dispositifs électroniques nécessaires à son bon fonctionnement. Il s'agit par exemple d'un instrument optique dans le cas d'une mission destinée à récolter des images et des mesures optiques, ou d'une ou plusieurs antennes dans le cas des satellites de télécommunication. La deuxième catégorie comprend des équipements désignés dans la présente demande comme secondaires, destinés au fonctionnement général du satellite tel que des propulseurs, des antennes de réception, des réservoirs ou des panneaux solaires ainsi que des dispositifs électroniques assurant le contrôle et la commande de ces servitudes.

Le lancement d'un satellite pour une mise en orbite s'effectue de manière classique au moyen d'un lanceur dans lequel le satellite est placé. Le lanceur comprend des moyens de propulsion lui permettant d'atteindre la destination prévue et d'y larguer le satellite.

Afin de réduire les coûts, il est connu d'utiliser un lanceur pour mettre en orbite plusieurs satellites, et ce au cours d'un même lancement. On parle alors de lancement multiple.

Les problèmes à résoudre sont notamment la tenue des satellites dans le lanceur et leur stockage dans la coiffe.

En effet, pendant le lancement puis au moment du largage, les satellites sont soumis à des chocs et à des vibrations transmis depuis le lanceur aux satellites. La disposition des satellites dans le lanceur doit donc éviter que les chocs et vibrations ne se propagent trop dans les satellites et ne détériorent les équipements tout en assurant une bonne tenue mécanique de l'ensemble des satellites dans le lanceur.

Une solution connue pour un lancement multiple consiste à relier les satellites à une structure centrale du lanceur, appelée dispenseur, qui forme des logements dans lesquels les satellites sont placés. Le document US 8,939,409 décrit un exemple de dispenseur. Un dispenseur comprend typiquement d'une part des éléments fixés au lanceur et éventuellement d'autre part des éléments fixés aux satellites, c'est-à-dire d'une part des éléments d'interface destinés à rester dans le lanceur après le largage des satellites et d'autre part des éléments d'interface destinés à accompagner les satellites largués. Les satellites sont ainsi supportés par le dispenseur à la manière d'une étagère, et ne se supportent pas les uns les autres. Une telle structure est cependant encombrante et n'est adaptée que pour des satellites de faibles dimensions, ou limite le nombre de satellites pouvant être installés dans le lanceur de par la taille de la coiffe. En outre, elle constitue une augmentation du poids du lanceur, alors qu'elle est inutile à la mission.

Une autre solution consiste alors à empiler les satellites les uns sur les autres en prévoyant, sur la structure même de chaque satellite, une interface dédiée pour l'empilement.

Le document US 8,511,617 (correspondant à la demande US 2009/224105) propose un exemple d'empilement de satellites présentant une structure d'interface dédiée. Dans ce document, la structure dédiée se présente sous la forme d'un cylindre extérieur, les cylindres servant alors de chemin à la transmission des efforts lorsque les satellites sont empilés. Le diamètre du cylindre d'un satellite est compris dans ce document entre 2 m et 5 m.

Un inconvénient de la structure est qu'elle est de diamètre important par rapport aux diamètres standard d'interface lanceur dans le domaine spatial. En effet, afin de monter un satellite dans un lanceur, ce dernier comprend un anneau d'interface satellite sur lequel le satellite est fixé. Afin que le lanceur soit compatible avec plusieurs satellites, il est connu que l'anneau d'interface satellite du lanceur soit d'un diamètre standard, choisi parmi 937 mm (millimètres), 1194 mm et 1666 mm. Par conséquent, la structure dédiée décrite dans US 8,511,617 ne peut pas être montée directement sur l'anneau d'interface satellite du lanceur, mais un support intermédiaire doit être placé entre le satellite et l'anneau du lanceur pour faire le lien entre les deux diamètres. En outre, le diamètre de la structure dédiée est supérieur au plus grand des diamètres standards, emplissant quasiment totalement l'espace sous coiffe du lanceur, de sorte que l'ensemble des équipements du satellite est localisé à l'intérieur du cylindre de la structure dédiée.

Le document EP 2202553 décrit un télescope spatial, et le document US 2012/154585 concerne un système d'antennes intégrés pour microsatellite.

Par conséquent, il existe un besoin pour un nouveau satellite présentant une structure permettant notamment de surmonter les inconvénients précités.

Ainsi, un premier objet de l'invention est de proposer un satellite permettant d'être installé dans un lanceur avec une bonne tenue mécanique.

Un deuxième objet de l'invention est de proposer un satellite pouvant être empilé avec un autre satellite avec une rigidité satisfaisante.

Un troisième objet de l'invention est de proposer un satellite permettant de disposer les équipements pour optimiser l'espace sous coiffe dans un lanceur.

Un quatrième objet de l'invention est de proposer un satellite dans lequel le montage des équipements sur le corps du satellite est simplifié.

Un cinquième objet de l'invention est de proposer un satellite pour lequel l'installation dans un lanceur est simplifiée.

Un sixième objet de l'invention est de proposer un satellite pouvant intégrer un instrument optique.

Un septième objet de l'invention est de proposer un satellite destiné à l'empilement de masse réduite.

Un huitième objet de l'invention est de proposer un satellite destiné à l'empilement de fabrication aisée.

Selon un premier aspect, l'invention propose un satellite comprenant un corps principal, de forme cylindrique. Le corps principal présente une paroi intérieure délimitant un espace intérieur et une paroi extérieure et s'étend selon un axe principal entre une surface d'extrémité inférieure et une surface d'extrémité supérieure. Au moins l'une de la surface d'extrémité inférieure et de la surface d'extrémité supérieure comprend un mécanisme d'interface destiné à coopérer avec un mécanisme d'interface complémentaire d'un autre satellite ou d'un lanceur. Le satellite comprend en outre au moins un équipement intérieur, fixé sur la paroi intérieure du corps principal et s'étendant au moins partiellement dans l'espace intérieur et au moins un équipement extérieur fixé sur la paroi extérieure du corps principal. L'équipement extérieur s'étend en saillie transversale sur la paroi extérieure par rapport à l'axe principal, l'au moins un équipement extérieur pouvant être une électronique, un réservoir d'ergols un actionneur gyroscopique ou une roue de réaction.

Le satellite ainsi conçu permet notamment d'optimiser l'encombrement dans l'espace sous coiffe d'un lanceur, en utilisant aussi bien l'espace intérieur que la surface de la paroi extérieure du corps.

Selon un mode de réalisation, le corps principal comprend un cylindre présentant un diamètre moyen de diamètre correspondant à un diamètre standard dans le domaine spatial, choisi parmi les valeurs suivantes : 937 mm, 1194 mm et 1666 mm.

Le corps principal peut alors directement reposer sur et directement être attaché à un anneau d'interface d'un lanceur, sans l'intermédiaire d'un adaptateur. L'ensemble ainsi formé créée alors un chemin de transmission des efforts entre l'anneau d'interface et le corps qui est sensiblement parallèle à la l'axe principal du corps principal, augmentant la rigidité de l'ensemble.

Selon un mode de réalisation, la paroi extérieure du corps principal comprend au moins une portion de surface plane, formant facette, sur laquelle l'équipement extérieur est fixé. La facette facilite le montage de l'équipement extérieur.

Selon un mode de réalisation, le corps principal est réalisé en pièces d'aluminium monolithique.

L'équipement intérieur comprend par exemple un instrument optique de prise de vue. L'équipement intérieur comprend par exemple l'électronique associée à l'instrument optique.

L'équipement intérieur peut comprendre un instrument optique comprenant un axe de visée orienté parallèlement à l'axe principal du corps principal. L'équipement intérieur peut en outre comprendre une platine de montage fixée à la paroi intérieure du corps principal et qui s'étend au moins partiellement en dehors de l'espace intérieur, au-delà de la surface d'extrémité supérieure du corps principal. L'instrument optique est alors fixé rigidement à la platine de montage. L'axe de visée de l'instrument optique est de préférence orienté vers la surface d'extrémité inférieure du corps principal, et la platine de montage s'étend au moins partiellement au-delà de la surface d'extrémité supérieure du corps principal.

Selon un mode de réalisation, le mécanisme d'interface est linéaire. Par exemple, le mécanisme d'interface comprend un système de sanglage.

Selon un deuxième aspect, l'invention propose un empilement de satellites comprenant au moins deux satellites tels que présentés ci-dessus. Les axes principaux des corps principaux des deux satellites sont parallèles entre eux. Un mécanisme d'interface de la surface d'extrémité supérieure d'un premier satellite est en contact selon les axes principaux avec un mécanisme d'interface de la surface d'extrémité inférieure du corps du deuxième satellite. Les mécanismes d'interface coopèrent alors l'un avec l'autre pour solidariser les deux satellites.

Selon un mode de réalisation, l'équipement intérieur du premier satellite s'étend partiellement dans l'espace intérieur du deuxième satellite.

Selon un troisième aspect, l'invention propose un ensemble de lancement comprenant un lanceur et au moins un satellite tel que présenté ci-dessus. Le lanceur comprend alors une coiffe définissant un logement pour au moins un satellite et un anneau d'interface et la surface d'extrémité inférieure du corps principal du satellite comprend un mécanisme d'interface pour être solidarisé avec l'anneau d'interface du lanceur.

D'autres caractéristiques et avantages apparaîtront à la lumière de la description de modes de réalisation de l'invention, accompagnée des figures dans lesquelles :
La figure 1 est une représentation schématique d'une vue en coupe d'un satellite.
La figure 2 est une représentation schématique d'une vue de côté du corps du satellite de la figure 1.
La figure 3 est une vue de côté d'un satellite selon un mode de réalisation dans lequel le satellite comprend un instrument optique.
La figure 4 est une vue tridimensionnelle de dessus du satellite de la figure 3.
La figure 5 est une vue tridimensionnelle de dessous du satellite de la figure 3.
La figure 6 est une représentation schématique d'une vue en coupe d'un empilement de satellites de la figure 1.
La figure 7 est une représentation schématique d'une vue en coupe d'un satellite de la figure 1 empilé avec un satellite d'une autre structure.
La figure 8 est une vue schématique d'une vue en coupe de plusieurs empilements de satellites de la figure 1 sur une même interface satellite d'un lanceur.
La figure 9 est une vue tridimensionnelle de dessous d'un exemple de réalisation de plusieurs empilements de satellites sur une même interface satellite d'un lanceur.

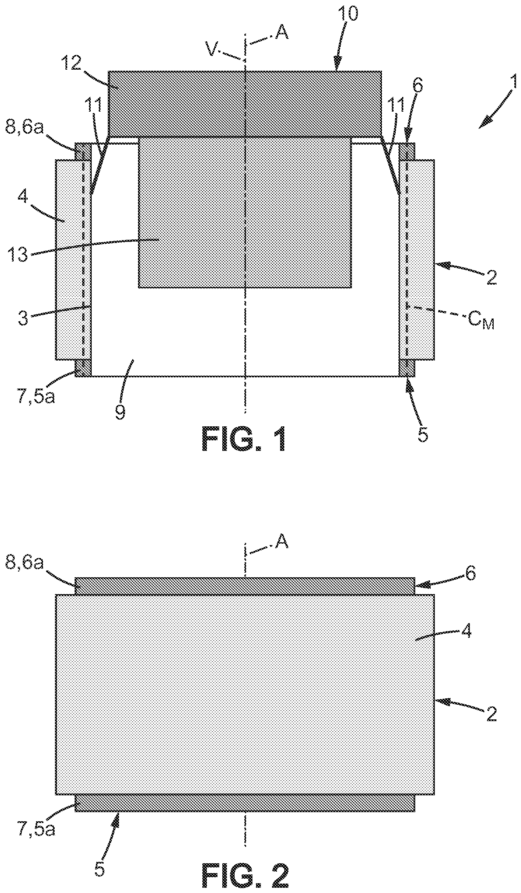

La figure 1 représente de manière schématique un satellite **1,** destiné à être placé en orbite autour de la Terre au moyen d'un lanceur. Le satellite 1 comprend un corps **2** principal, de forme générale cylindrique s'étendant selon un axe **A** principal.

Dans ce qui suit, l'adjectif « longitudinal » et ses variantes désignent ce qui est parallèle à l'axe A principal ; l'adjectif « transversal » et ses variantes désignent ce qui est compris dans un plan perpendiculaire à l'axe A principal.

L'adjectif cylindrique doit ici être compris dans son sens large comme définissant une surface dessinée par une droite génératrice décrivant une courbe directrice. La courbe directrice peut être circulaire, le corps 2 principal ayant alors une forme tubulaire, ou polygonale, le corps 2 principal ayant alors la forme d'un prisme.

Le corps 2 principal présente une paroi **3** intérieure et une paroi **4** extérieure, qui définissent une épaisseur du corps 2 principal.

Dans ce qui suit, l'adjectif « intérieur » et ses variantes désignent ce qui est tourné vers ou proche de l'axe A principal, par opposition à l'adjectif « extérieur » et ses variantes, qui désignent ce qui est tourné à l'opposé de ou éloigné de l'axe A principal.

Le corps 2 principal s'étend selon l'axe A principal entre une surface **5** d'extrémité dite inférieure et une surface **6** d'extrémité dite supérieure. Afin de permettre l'empilement de plusieurs satellites 1 avec une bonne tenue mécanique, comme cela sera explicité plus loin, les deux surfaces 5, 6 d'extrémité présentent des dimensions transversales identiques, permettant de mettre en correspondance la surface 6 d'extrémité supérieure d'un satellite 1 avec la surface 5 d'extrémité inférieure d'un autre satellite.

Le diamètre de la surface 5 d'extrémité inférieure est alors compatible avec les diamètres standards dans le domaine spatial, et qui sont ceux appliqués sur l'anneau d'interface satellite des lanceurs : 937 mm, 1194 mm et 1666 mm.

Plus précisément, le diamètre de l'extrémité 5 inférieure désigne ici, par souci de simplification, le diamètre du cercle moyen au corps 2 principal, entre la surface 3 intérieure et la surface 4 extérieure, au niveau de l'extrémité 5 inférieure. Le diamètre de l'extrémité 5 inférieure est alors sensiblement égal à une des valeurs standards énoncées ci-dessus.

Par conséquent, il est possible de définir pour le corps 2 cylindrique un cylindre C_{M} moyen dont la courbe directrice est un cercle de diamètre sensiblement égal à une des valeurs standards énoncées ci-dessus, le cylindre C_{M} moyen s'étendant sur toute la dimension longitudinale du corps 2 cylindrique, entre les deux surfaces 5, 6 d'extrémité, et compris, là encore sur toute sa dimension longitudinale, entre la paroi 3 intérieure et la paroi 4 extérieure.

Au moins une de la surface 5 d'extrémité inférieure et de la surface 6 d'extrémité supérieure comprend un mécanisme d'interface, destiné à coopérer avec un autre mécanisme d'interface, complémentaire, d'une interface satellite d'un lanceur ou d'un autre satellite. Selon un mode de réalisation particulier, la surface 5 d'extrémité inférieure comprend un mécanisme **7** d'interface inférieur et la surface 6 d'extrémité supérieure comprend un mécanisme **8** d'interface supérieur.

Les mécanismes 7, 8 d'interface permettent ainsi au satellite 1 d'être mis en contact avec et d'être solidarisé à un autre satellite ou à un anneau d'interface satellite d'un lanceur. Avantageusement, le mécanisme 7 d'interface inférieur est complémentaire du mécanisme 8 d'interface supérieur, permettant à deux satellites 1 tels que présentés ci-dessus d'être empilés et d'être solidarisés par leurs mécanismes 7, 8 d'interface mis en correspondance.

Les mécanismes, respectivement 7, 8 d'interface, sont par exemple linéaires, c'est-à-dire qu'ils s'étendent de manière continue sur l'ensemble de la circonférence des extrémités, respectivement 5, 6 du corps 2 principal. Selon un exemple de réalisation, le mécanisme 7 d'interface inférieur du satellite 1 comprend un anneau d'interface et le mécanisme 8 d'interface supérieur de ce même satellite 1 comprend également un anneau dont la forme lui permet de s'emboîter sur l'anneau du mécanisme 7 d'interface inférieur d'un autre satellite. Comme cela sera explicité plus loin, le mécanisme 7 d'interface supérieure et/ou le mécanisme 8 d'interface inférieur comprend un système de sanglage libérable qui permet d'enserrer et de maintenir solidaires deux mécanismes d'interface complémentaires de deux satellites empilés au moyen d'une sangle. Le diamètre des anneaux des mécanismes 7, 8 d'interface correspondent au diamètre du cylindre C_{M} moyen.

La paroi 3 intérieure définit un espace **9** intérieur, s'étendant entre les deux surfaces 5, 6 extrêmes du corps 2 principal. Un équipement **10** intérieur est en contact avec et fixé à la paroi 3 intérieure de manière à s'étendre au moins partiellement dans l'espace 9 intérieur.

Par équipement, on entend ici tout instrument, ensemble d'instruments ou toute électronique du satellite. Par exemple, l'équipement 10 intérieur comprend des bras 11 s'étendant transversalement à l'axe A principal, dont une extrémité est en contact avec et fixé sur la paroi 3 intérieur et l'autre extrémité est en contact avec et fixé sur l'équipement 10 intérieur.

De préférence, l'équipement 10 intérieur comprend la charge utile du satellite, c'est-à-dire l'équipement principal nécessaire à la mission du satellite 1.

Selon un exemple de réalisation du satellite, qui est celui illustré sur les figures, la charge utile comprend un instrument **13** optique. L'équipement 10 intérieur peut alors comprendre une platine **12** de montage sur laquelle l'instrument 13 est fixé rigidement. Les bras 11 sont avantageusement fixés sur la platine 12 également. La platine 12 peut comporter un ou plusieurs détecteurs optiques qui ont préférentiellement une vue dégagée sur au moins une face pour un bon refroidissement par rayonnement. C'est pourquoi la platine 12 peut émerger au-delà d'une des extrémités 5, 6 du corps 2 principal du satellite 1, hors de l'espace 9 intérieur.

L'instrument 13 optique est défini notamment par un axe **V** de visée, définissant virtuellement la direction dans laquelle l'instrument optique « voit », et par un champ de vue, définissant le cône d'entrée des rayons lumineux dans l'instrument 13 optique.

De préférence, la platine 12 émerge hors de l'espace 9 intérieur par la surface 6 d'extrémité supérieure. Ainsi, l'axe V de visée de l'instrument 13 optique est dirigé vers la surface 5 d'extrémité inférieure du corps 2 principal.

Le corps 2 principal peut, outre sa fonction de transmission d'effort dans un empilement de satellites, fournir d'autres fonctions, et notamment des fonctions de protection de l'équipement 10 intérieur. Par exemple, le corps 2 principal peut servir de baffle. De préférence, les éléments fragiles l'instrument 13 optique sont entièrement compris dans l'espace 9 intérieur. Les éléments fragiles sont par exemple des miroirs et leur support. Le corps 2 principal forme alors une barrière empêcher les rayons du Soleil d'atteindre les éléments fragiles de l'instrument 13 optique.

En variante ou en combinaison, le corps 2 principal peut être réalisé en aluminium monolithique, par opposition à un matériau composite par exemple en peau Aluminium et Nida Aluminium, de manière à former un répartiteur thermique pour l'équipement 15 extérieur. En outre les équipements peuvent être fixés directement sur la structure, sans utilisation d'inserts, contrairement aux composites utilisés couramment dans le spatial.

De préférence le corps 2 principal et les mécanismes d'interfaces inférieurs et supérieurs forment une seule pièce monolithique, qui peut être obtenue par usinage d'un cylindre en aluminium. Dans ce cas la capacité de transmission des efforts et la rigidité de l'ensemble sont augmentées, notamment s'il est associé à un mécanisme 7, 8 d'interface linéaire, comme indiqué plus haut telle une sangle.

Il est également possible d'usiner directement des structures de support secondaires, pour la tenue des équipements ou de l'instrument.

Selon cet exemple, l'équipement 10 intérieur comprend en outre l'électronique associée à l'instrument 13. L'électronique est alors par exemple directement en contact avec et fixé sur la paroi 3 intérieur, dans le milieu 9 intérieur, de manière à pouvoir être monté d'un seul bloc avec l'instrument 13. En effet, l'instrument 13 et son électronique sont en général livrés sur le lieu d'assemblage du satellite 1 comme étant un ensemble dont les connexions sont testées et certifiées comme fonctionnelles. Toute déconnexion entraîne la nécessité de devoir tester de nouveau les connexions. Ainsi, en conservant l'ensemble formé par l'instrument 13 et son électronique pour la fixer sur la paroi 3 intérieure du corps 2 principal, les déconnexions sont évitées.

L'axe V de visée de l'instrument 13 optique peut être confondu avec l'axe A principal, auquel cas l'électronique de l'instrument peut être répartie tout autour de l'instrument 13 dans l'espace 9 intérieur. Toutefois, l'axe V de visée est de préférence parallèle à l'axe A principal mais décalé, de manière à dégager une région dans l'espace 9 intérieur pour placer l'électronique de l'instrument. En variante encore, l'axe V de visée peut être incliné par rapport à l'axe A principal.

Le satellite 1 comprend en outre au moins un équipement **15** extérieur, en contact avec et fixé sur la paroi 4 extérieure du corps 2 du satellite, et s'étendant donc hors de l'espace 9 intérieur. L'équipement 15 extérieur est choisi parmi une électronique par exemple une électronique **16** de commande du satellite, un réservoir **18** d'ergol, un actionneur **17** gyroscopique (aussi appelé CMG pour *Control Momentum Gyroscope*) ou une roue de réaction. D'autres équipements extérieurs secondaires peuvent également être fixés sur la paroi 4 extérieure, par exemple, des capteurs, des propulseurs permettant de rectifier la trajectoire du satellite 1 si besoin ou encore des panneaux solaires.

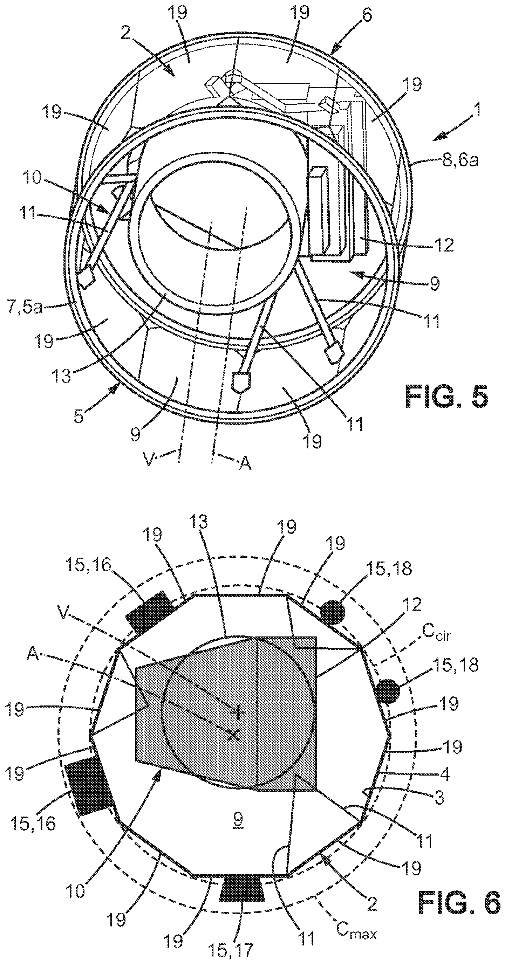

L'équipement 15 extérieur forme donc une saillie transversale à l'axe A principal sur la paroi 4 extérieure sur une dimension contrôlée, correspondant à la place dans le lanceur. Par exemple, l'équipement 15 extérieur définit un cercle Cₘₐₓ, circonscrit à l'équipement 15 extérieur, et dont le diamètre est supérieur au diamètre du cercle C_{cir} circonscrit à la paroi 4 extérieure du corps 2 principal d'au moins 20 % (figure 6). Il est possible de monter des équipements de plus grande taille avec éventuellement des structures secondaires externes supplémentaires reliées au corps principal. Des panneaux solaires plans peuvent aussi être montés. Le diamètre du cercle Cₘₐₓ peut être alors supérieur de 30% voire 40% ou 50% à celui du cercle C_{cir} circonscrit. La limite pratique est le diamètre de la coiffe du lanceur utilisé.

Ainsi, comme le diamètre du cylindre C_{M} moyen correspond à un diamètre standard, de la place est libérée autour du corps 2 principal lorsque le satellite 1 est placé sous la coiffe d'un lanceur, permettant de fixer sur la paroi 4 extérieur les équipements 15 extérieurs volumineux en saillie. L'encombrement sous coiffe est ainsi optimisé.

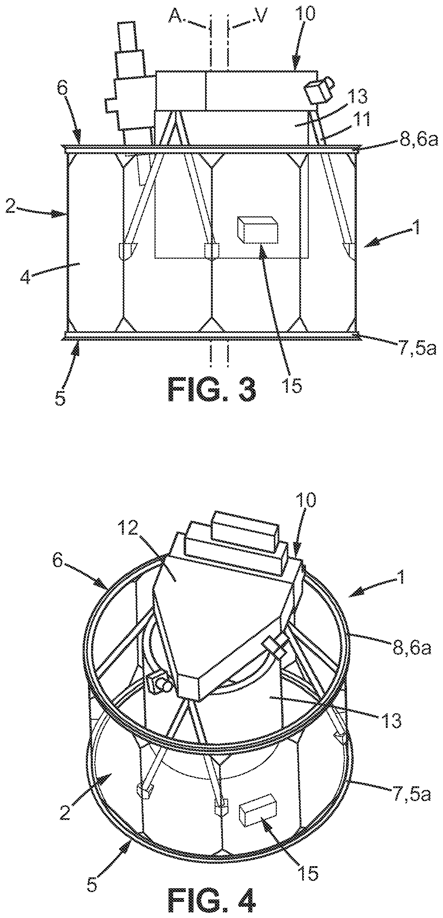

Selon un mode de réalisation, la paroi 4 extérieure du corps 2 du satellite peut comprendre une portion plane, qui peut s'étendre mais non nécessairement sur toute la dimension selon l'axe A principal de manière à former une facette. Par exemple, lorsque la courbe directrice du corps 2 principal est un polygone comme illustré sur les figures 3 à 6, la paroi 4 extérieure est formée d'une succession de facettes **19** sensiblement planes, particulièrement adaptées à la fixation de l'équipement 15 extérieur, et notamment à des électroniques.

Ainsi, le corps 2 principal offre des possibilités de montage d'équipements 10 intérieurs et d'équipements 15 extérieurs particulièrement adaptées à optimiser la place disponible sous coiffe dans le lanceur.

Le satellite 1 ainsi décrit permet d'être empilé avec d'autres satellites et d'être placé sous la coiffe d'un lanceur.

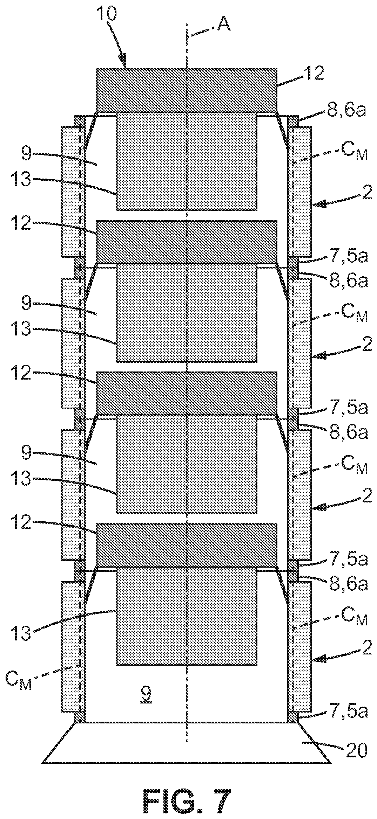

Un premier exemple d'empilement est illustré sur la figure 7. Selon cet exemple, quatre satellites 1 tels que décrits ci-dessus et sensiblement identiques sont empilés les uns au-dessus des autres par leurs corps 2 principal. Les satellites 1 sont disposés selon un même axe A principal, et leur équipement 10 intérieur comprend un instrument 13 d'optique dont la ligne V de visée est dirigée vers la surface 5 d'extrémité inférieure. Les quatre satellites 1 ont un corps 2 principal centré sur un cylindre C_{M} moyen de même diamètre.

Selon l'exemple, un premier satellite 1 est fixé au lanceur par son mécanisme 7 d'interface inférieur. Plus précisément, le lanceur comprend un mécanisme d'interface satellite, typiquement un anneau **20,** complémentaire de l'anneau du mécanisme 7 d'interface inférieur d'un premier satellite 1. Le premier satellite 1 est alors placé de sorte que son mécanisme 7 d'interface inférieur soit emboîté sur l'anneau du mécanisme d'interface du lanceur. Comme l'anneau du mécanisme 7 d'interface inférieur du premier satellite est égal au diamètre du cylindre C_{M} moyen, lequel correspond au diamètre de l'anneau 20 du mécanisme d'interface satellite du lanceur, il n'est pas nécessaire de placer un adaptateur entre l'anneau 20 du lanceur et le premier satellite 1. Le lanceur comprend également un système de sanglage libérable, dont la sangle enserre l'anneau 20 de mécanisme d'interface du lanceur et l'anneau du mécanisme 7 d'interface inférieur du premier satellite. Le premier satellite 1 est ainsi solidarisé au lanceur.

Un deuxième satellite 1 est empilé sur le premier satellite 1, l'anneau du mécanisme 7 d'interface inférieure du deuxième satellite étant emboîté sur l'anneau du mécanisme 8 d'interface supérieure du premier satellite. Le mécanisme 8 d'interface supérieure du premier satellite comprend alors un système de sanglage libérable dont la sangle vient enserrer l'anneau du mécanisme 8 d'interface supérieure du premier satellite 1 et l'anneau du mécanisme 7 d'interface inférieure du deuxième satellite.

Un troisième satellite est de même empilé sur le deuxième satellite 1, et un quatrième satellite 1 est empilé sur le troisième satellite. Le quatrième, et dernier, satellite 1 ne comprend pas de système de sanglage.

Là encore, comme tous les satellites de l'empilement sont centrés selon un même cylindre C_{M} moyen, aucun adaptateur entre les satellites 1 n'est nécessaire.

Les satellites 1 ainsi empilés ont leurs axes A principaux confondus. De même, l'axe V de visée des instruments 13 optiques sont tous sensiblement parallèles.

Selon l'exemple présenté ici, l'instrument 13 optique de chaque satellite 1 étant à distance de la surface 5 d'extrémité inférieure du corps 2 du satellite correspondant, les équipements 10 intérieurs peuvent être à cheval dans l'espace 9 intérieur de deux satellites 1 empilés. En effet, la platine 12 émergeant par la surface 6 d'extrémité supérieure d'un satellite inférieur, peut venir se loger dans l'espace 9 intérieur du satellite supérieur, entre le l'instrument 13 optique et la surface 5 d'extrémité inférieure du satellite 1 supérieur.

Les équipements 15 extérieurs des satellites 1, s'étendant transversalement à partir de la paroi 4 extérieure du corps 2 de chaque satellite 1 n'interfèrent pas les uns avec les autres.

En outre, comme il n'y a pas de changement de diamètre depuis l'anneau 20 du lanceur jusqu'au corps 2 principal du quatrième satellite 1, la tenue mécanique de l'empilement est augmentée. Les satellites 1 empilés ont leur cylindre C_{M} moyen sensiblement dans la continuité les uns des autres et de l'anneau 20 d'interface satellite du lanceur, matérialisant le chemin par lequel les efforts sont transmis entre les satellites. Le chemin de transmission des efforts s'étend donc quasiment exclusivement longitudinalement depuis l'anneau 20 d'interface satellite du lanceur jusqu'au quatrième satellite 1 et passe uniquement par les corps 2 principaux des satellites 1, ce qui permet à l'empilement d'avoir une bonne tenue mécanique. L'équipement 10 intérieur de chaque satellite 1 est protégé des vibrations et des chocs, les efforts ne leur étant pas transmis.

La liaison linéaire fournie par les systèmes de sanglage assure par ailleurs une bonne répartition des efforts sur l'ensemble de la circonférence des corps 2 principaux des satellites 1.

Conséquemment à la conception des satellites 1 et à leur empilement, l'axe V de visée de chacun des instruments 13 optiques est orienté vers l'anneau d'interface satellite du lanceur.

Cette orientation de l'axe V de visée permet au satellite de gagner en compacité. En effet, notamment dans le cas où l'instrument 3 optique est un instrument de prise de vue, en orientant l'axe V de visée vers l'anneau d'interface satellite du lanceur, le diamètre des miroirs de l'instrument 3 optique peut être augmenté tout en conservant les rapports dimensionnels nécessaires optiquement au sein de l'instrument 3. Or, plus les miroirs sont de grand diamètre, meilleure est la résolution de l'instrument 3 optique. Par ailleurs, les efforts passant par le corps 2 principal, la platine 12 de montage peut avoir son épaisseur réduite par rapport à l'état de la technique, permettant d'augmenter la dimension selon l'axe A principal de l'instrument 3 optique tout en conservant une dimension totale selon l'axe A du satellite adaptée à l'espace dans le lanceur. Ainsi, en conservant la dimension du satellite selon l'axe A principal adaptée à l'encombrement dans le lanceur, les performances de l'instrument 3 optique sont augmentées.

Lorsque les satellites 1 doivent être largués dans l'espace, chaque système de sanglage est ouvert, de manière à libérer les mécanismes 7, 8 d'interface, par exemple au moyen d'un dispositif pyrotechnique commandé à distance depuis la Terre, depuis le lanceur ou programmé afin de respecter une séquence de largage déterminée. La séparation entre les satellites 1 et le premier satellite 1 et l'anneau 20 d'interface satellite peut être facilité au moyen d'éléments précontraints, de type ressort, libérés lorsque les sangles sont ouvertes.

Les systèmes de sanglage du premier, du deuxième et du troisième satellites 1 restent de préférence accrochés à leur satellite respectif une fois ouverts. Par exemple, chaque système de sanglage comprend un point d'accroché sur le corps du satellite correspondant. Lorsque le premier satellite 1 est largué, le système de sanglage du lanceur reste accroché au lanceur.

Selon un mode de réalisation particulier, chaque satellite 1 peut disposer d'un système de captation du système de sanglage une fois ouvert

Selon un mode de réalisation particulier, chaque satellite 1 doit assurer la transmission de la commande de l'ouverture du système de sanglage vers le satellite 1 suivant, depuis le premier satellite 1 jusqu'au quatrième satellite 1. Ce faisant, le même ordre répété n fois permet de libérer n satellite un par un.

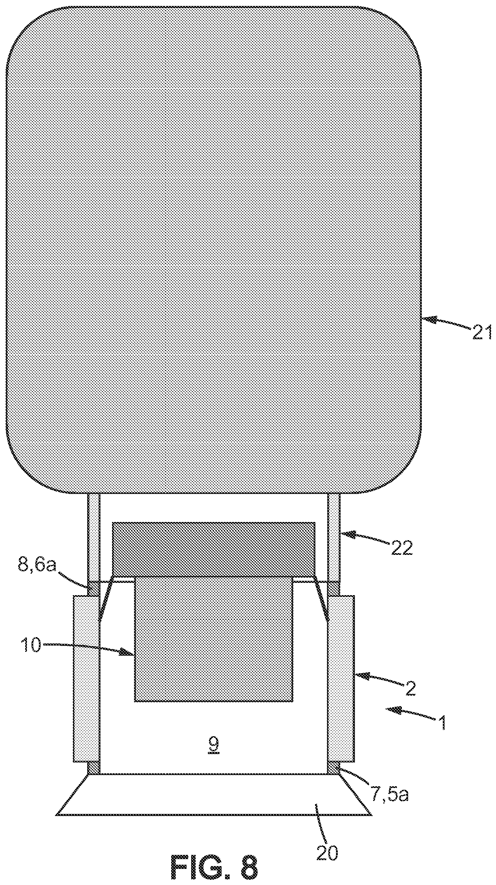

Sur la figure 8, il est représenté un deuxième exemple d'empilement d'un satellite 1 selon un mode de réalisation de l'invention et un satellite **21** différent. Le satellite 21 différent présente notamment des dimensions transversales ne correspondant pas à celles des surfaces 5, 6 d'extrémités du satellite 1 selon l'invention. Le satellite 1 selon l'invention est monté comme précédemment sur un anneau 20 d'interface satellite d'un lanceur, et le satellite 21 différent est empilé sur la surface 6 d'extrémité supérieure du satellite selon l'invention, à l'aide d'un adaptateur **22** permettant de combler la différence de dimensions transversales.

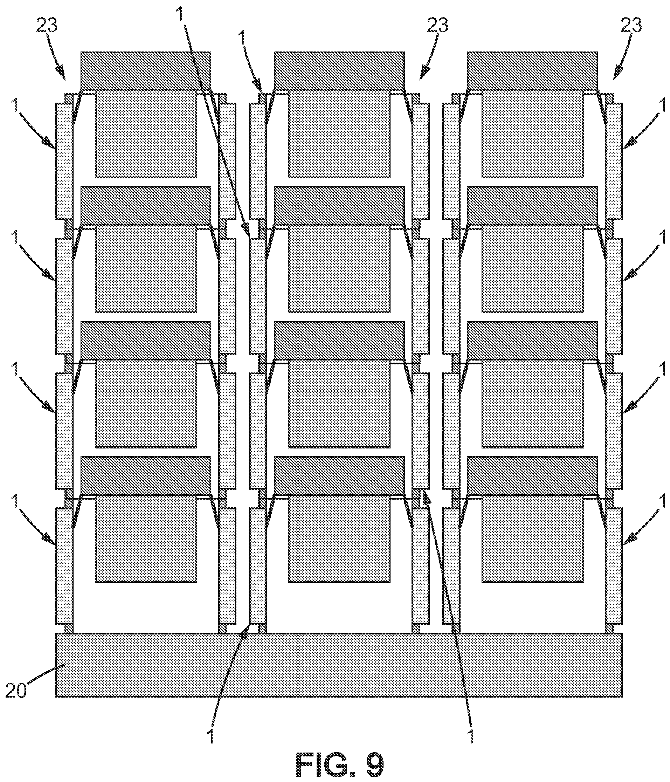

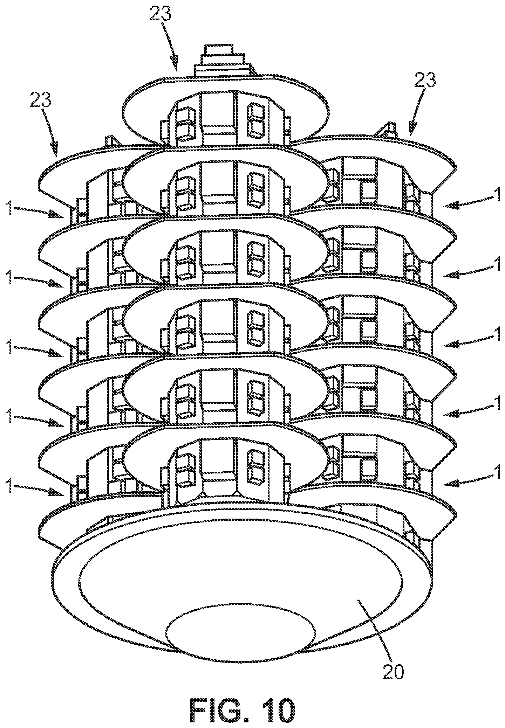

Sur les figures 9 et 10, il est illustré un troisième exemple d'empilement de satellites 1, sensiblement identiques et selon l'invention. Selon ce troisième exemple, plusieurs colonnes 23 de satellites 1 peuvent être montées les unes à côtés des autres sur un même anneau 20 d'interface satellite d'un lanceur. Les colonnes 23 peuvent être alignées transversalement ou agencées en quinconce sur l'anneau 20. Un adaptateur est alors monté entre le premier satellite de chaque colonne 23 et l'anneau 20 d'interface satellite.

Le nombre de satellites 1 peut être, mais non nécessairement, le même dans chaque colonne 23.

L'arrangement en colonne permet par exemple de réaliser des séquences de largage dans l'espace par colonne 23, les satellites 1 d'une colonne 23 étant amenés à une localisation déterminée d'où ils peuvent alors être séparés entre eux. Ainsi, un seul dispositif de contrôle de trajectoire par colonne 23 peut être mis en place.

L'arrangement en colonne permet aussi de réaliser des séquences de largage dans l'espace par tranche. Les satellites d'une même tranche tranche sont largués en même temps. La tranche suivante peut être larguée sur une orbite différente si le lanceur a la possibilité de rallumer sa propulsion.

## Revendications

1. Satellite (**1**) comprenant un corps (**2**) principal, de forme cylindrique, le corps (**2**) principal présentant une paroi (**3**) intérieure délimitant un espace (**9**) intérieur et une paroi (**4**) extérieure et s'étendant selon un axe (**A**) principal entre une surface (**5**) d'extrémité inférieure et une surface (**6**) d'extrémité supérieure, la surface (**5**) d'extrémité inférieure comprenant un mécanisme (**7**) d'interface destiné à coopérer avec un mécanisme (**20**) d'interface complémentaire d'un lanceur, le satellite (**1**) comprenant en outre au moins un équipement (**10**) intérieur, fixé sur la paroi (**3**) intérieure du corps (**2**) principal et s'étendant au moins partiellement dans l'espace (**9**) intérieur, dans lequel la paroi (**4**) extérieure du corps (**2**) principal comprend au moins une portion (**19**) de surface plane, formant facette, et dans lequel l'équipement (**10**) intérieur comprend un instrument optique de prise de vue, et l'électronique associée à l'instrument (**13**) optique, l'instrument (**13**) optique comprenant un axe (**V**) de visée orienté parallèlement à l'axe (**A**) principal du corps (**2**) principal, **caractérisé en ce que** le satellite (1) comprend au moins un équipement (**15**) extérieur fixé sur la paroi (**4**) extérieure du corps principal, l'équipement (**15**) extérieur s'étendant en saillie transversale sur la paroi (**4**) extérieure par rapport à l'axe (**A**) principal, l'au moins un équipement (**15**) extérieur étant soit un réservoir d'ergols soit un actionneur inertiel tel un actionneur gyroscopique ou une roue de réaction, et **en ce que** l'équipement (**15**) extérieur est fixé sur ladite au moins une portion (**19**) de surface plane, formant facette.

2. Satellite selon la revendication 1, dans lequel le corps (**2**) principal comprend un cylindre présentant un diamètre (**C_{M}**) moyen de diamètre correspondant à un diamètre standard dans le domaine spatial, choisi parmi les valeurs suivantes : 937 mm, 1194 mm et 1666 mm.

3. Satellite selon l'une quelconque des revendications 1 et 2, dans lequel la surface (**6**) d'extrémité supérieure comprend un mécanisme (**8**) d'interface destiné à coopérer avec un mécanisme (**7**) d'interface complémentaire de la surface (**5**) d'extrémité inférieure d'un autre satellite.

4. Satellite (**1**) selon l'une quelconque des revendications précédentes, dans lequel le corps (**2**) principal est réalisé en pièces d'aluminium monolithique.

5. Satellite (**1**) selon l'une quelconque des revendications précédentes, dans lequel l'équipement (**10**) intérieur comprend une platine (**12**) de montage fixée à la paroi (**3**) intérieure du corps (**2**) principal et s'étendant au moins partiellement en dehors de l'espace (**9**) intérieur, au-delà de la surface (**6**) d'extrémité supérieure du corps (**2**) principal, et dans lequel l'instrument (**13**) optique est fixé rigidement à la platine (**12**) de montage.

6. Satellite (**1**) selon la revendication 5, dans lequel l'axe (**V**) de visée de l'instrument (**13**) optique est orienté vers la surface (**5**) d'extrémité inférieure du corps principal.

7. Satellite (**1**) selon l'une quelconque des revendications précédentes, dans lequel le mécanisme (**7**, **8**) d'interface est linéaire.

8. Satellite (**1**) selon la revendication précédente, dans lequel le mécanisme (**7**, **8**) d'interface comprend un système de sanglage.

9. Empilement de satellites (**1**) comprenant un premier satellite (**1**) selon la revendication 3 ou l'une quelconque des revendications 4 à 8 telle que rattachée à la revendication 3, et au moins un deuxième satellite selon l'une quelconque des revendications précédentes, les axes (**A**) principaux des corps (**2**) principaux des deux satellites (**1**) étant parallèles, le mécanisme (**8**) d'interface de la surface (**6**) d'extrémité supérieure du premier satellite (**1**) étant en contact selon les axes (**A**) principaux avec le mécanisme (**7**) d'interface de la surface (**5**) d'extrémité inférieure du corps (**2**) du deuxième satellite **(**1), les mécanismes (**7**, **8**) d'interface coopérant l'un avec l'autre pour solidariser les deux satellites (**1**).

10. Empilement de satellites (**1**) selon la revendication 9, dans lequel l'équipement (**10**) intérieur du premier satellite (**1**) s'étend partiellement dans l'espace (**9**) intérieur du deuxième satellite (**1**).

11. Ensemble de lancement comprenant un lanceur et au moins un satellite (**1**) selon l'une quelconque des revendications 1 à 8, le lanceur comprenant une coiffe définissant un logement pour au moins un satellite (**1**) et un anneau (**20**) d'interface, la surface (**5**) d'extrémité inférieure du corps (**2**) principal du satellite (**1**) comprenant un mécanisme (7) d'interface pour être solidarisé avec l'anneau (**20**) d'interface du lanceur.

## Patentansprüche

1. Satellit (1), umfassend einen zylinderförmigen Hauptkörper (2), wobei der Hauptkörper (2) eine Innenwand (3), die einen Innenraum (9) begrenzt, und eine Außenwand (4) aufweist und sich entlang einer Hauptachse (A) zwischen einer unteren Endfläche (5) und einer oberen Endfläche (6) erstreckt, wobei die untere Endfläche (5) einen Schnittstellenmechanismus (7) umfasst, der dazu bestimmt ist, mit einem komplementären Schnittstellenmechanismus (20) einer Trägerrakete zusammenzuwirken, wobei der Satellit (1) ferner zumindest eine Inneneinrichtung (10) umfasst, die an der Innenwand (3) des Hauptkörpers (2) befestigt ist und sich zumindest teilweise in den Innenraum (9) erstreckt, wobei die Außenwand (4) des Hauptkörpers (2) zumindest einen ebenen facettierten Flächenabschnitt (19) umfasst und wobei die Inneneinrichtung (10) ein optisches Aufnahmeinstrument und die mit dem optischen Instrument (13) verbundene Elektronik umfasst, wobei das optische Instrument (13) eine Sichtachse (V) umfasst, die parallel zur Hauptachse (A) des Hauptkörpers (2) ausgerichtet ist, **dadurch gekennzeichnet, dass** der Satellit (1) zumindest eine Außeneinrichtung (15) umfasst, die an der Außenwand (4) des Hauptkörpers befestigt ist, wobei sich die Außeneinrichtung (15) in Bezug auf die Hauptachse (A) an der Außenwand (4) quer hervorragend erstreckt, wobei die zumindest eine Außeneinrichtung (15) entweder ein Treibstoffbehälter oder ein Trägheitsstellantrieb, wie etwa ein gyroskopischer Stellantrieb oder ein Reaktionsrad, ist, und dadurch, dass die Außeneinrichtung (15) an dem zumindest einen ebenen facettierten Flächenabschnitt (19) befestigt ist.

2. Satellit nach Anspruch 1, wobei der Hauptkörper (2) einen Zylinder umfasst, der einen mittleren Durchmesser (C_{M}) eines Durchmessers aufweist, der einem mittleren Standarddurchmesser aus dem Raumfahrtbereich entspricht und aus den folgenden Werten ausgewählt ist: 937 mm, 1.194 mm und 1.666 mm.

3. Satellit nach einem der Ansprüche 1 und 2, wobei die obere Endfläche (6) einen Schnittstellenmechanismus (8) umfasst, der dazu bestimmt ist, mit einem komplementären Schnittstellenmechanismus (7) der unteren Endfläche (5) eines anderen Satelliten zusammenzuwirken.

4. Satellit (1) nach einem der vorangehenden Ansprüche, wobei der Hauptkörper (2) aus monolithischen Aluminiumteilen ausgeführt ist.

5. Satellit (1) nach einem der vorangehenden Ansprüche, wobei die Inneneinrichtung (10) eine Montageplatte (12) umfasst, die an der Innenwand (3) des Hauptkörpers (2) befestigt ist und sich zumindest teilweise außerhalb des Innenraums (9) über die obere Endfläche (6) des Hauptkörpers (2) hinaus erstreckt, und wobei das optische Instrument (13) starr an der Montageplatte (12) befestigt ist.

6. Satellit (1) nach Anspruch 5, wobei die Sichtachse (V) des optischen Instruments (13) zur unteren Endfläche (5) des Hauptkörpers ausgerichtet ist.

7. Satellit (1) nach einem der vorangehenden Ansprüche, wobei der Schnittstellenmechanismus (7, 8) linear ist.

8. Satellit (1) nach dem vorangehenden Anspruch, wobei der Schnittstellenmechanismus (7, 8) ein Gurtsystem umfasst.

9. Stapel von Satelliten (1), umfassend einen ersten Satelliten (1) nach Anspruch 3 oder einem der Ansprüche 4 bis 8, soweit auf Anspruch 3 rückbezogen, und zumindest einen zweiten Satelliten nach einem der vorangehenden Ansprüche, wobei die Hauptachsen (A) der Hauptkörper (2) der beiden Satelliten (1) parallel sind, wobei der Schnittstellenmechanismus (8) der oberen Endfläche (6) des ersten Satelliten (1) entlang der Hauptachsen (A) mit dem Schnittstellenmechanismus (7) der unteren Endfläche (5) des Körpers (2) des zweiten Satelliten (1) in Kontakt steht, wobei die Schnittstellenmechanismen (7, 8) miteinander zusammenwirken, um die beiden Satelliten (1) zu verbinden.

10. Stapel von Satelliten (1) nach Anspruch 9, wobei sich die Inneneinrichtung (10) des ersten Satelliten (1) teilweise in den Innenraum (9) des zweiten Satelliten (1) erstreckt.

11. Startbaugruppe, umfassend eine Trägerrakete und zumindest einen Satelliten (1) nach einem der Ansprüche 1 bis 8, wobei die Trägerrakete eine Haube, die eine Aufnahme für zumindest einen Satelliten (1) definiert, und einen Schnittstellenring (20) umfasst, wobei die untere Endfläche (5) des Hauptkörpers (2) des Satelliten (1) einen Schnittstellenmechanismus (7) umfasst, um mit dem Schnittstellenring (20) der Trägerrakete verbunden zu werden.

## Claims

1. Satellite (**1**) comprising a main body (**2**) having a cylindrical shape, the main body (**2**) having an inner wall (**3**) delimiting an inner space (**9**) and an outer wall (**4**) extending along a main axis (**A**) between a lower end surface (**5**) and an upper end surface (**6**), the lower end surface (**5**) comprising an interface mechanism (**7**) intended for engaging with a complementary interface mechanism (**20**) of a launcher, the satellite (**1**) also comprising at least one internal item of equipment (**10**), fixed onto the inner wall (**3**) of the main body (**2**) and extending at least partially into the inner space (**9**), in which the outer wall (**4**) of the main body (**2**) comprises at least a portion (**19**) of plane surface, forming a facet, and in which the internal item of equipment (**10**) comprises an optical imaging instrument, and the electronics associated with the optical instrument (**13**), the optical instrument (**13**) comprising a sighting axis (**V**) oriented parallel to the main axis (**A**) of the main body (**2**), **characterized in that** the satellite comprises at least one external item of equipment (**15**) fixed onto the outer wall (**4**) of the main body, the external item of equipment (**15**) extending as a transverse projection from the outer wall (**4**) with respect to the main axis (**A**), the at least one external item of equipment (**15**) being either a tank of propellants or an inertial actuator such as a control momentum gyroscope or a momentum wheel, and **in that** the external item of equipment (**15**) is fixed on said at least a portion of plane surface, forming a facet.

2. Satellite according to claim 1, in which the main body (**2**) comprises a cylinder having an average diameter **(C_{M}),** the diameter of which corresponds to a standard diameter in the space field, chosen from the following values: 937 mm, 1194 mm and 1666 mm.

3. Satellite according to any one of claims 1 and 2, in which the upper end surface (**6**) comprises an interface mechanism (**8**) intended for engaging with a complementary interface mechanism (**7**) of the lower end surface (**5**) of another satellite.

4. Satellite (**1**) according to any one of the preceding claims, in which the main body (**2**) is produced from parts made from monolithic aluminium.

5. Satellite (**1**) according to any one of the preceding claims, in which the internal item of equipment (**10**) comprises a mounting plate (**12**) fixed to the inner wall (**3**) of the main body (**2**) and extending at least partially outside the inner space (**9**), beyond the upper end surface (**6**) of the main body (**2**), and in which the optical instrument (**13**) is rigidly fixed to the mounting plate (**12**).

6. Satellite (**1**) according to claim 5, in which the sighting axis (**V**) of the optical instrument (**13**) is oriented towards the lower end surface (**5**) of the main body.

7. Satellite (**1**) according to any one of the preceding claims, in which the interface mechanism (**7**, **8**) is linear.

8. Satellite (**1**) according to the preceding claim, in which the interface mechanism (**7**, **8**) comprises a clamp band system.

9. Satellite stack (**1**) comprising a first satellite (**1**) according to claim 3 or any one of claims 4 to 8 as appended to claim 3, and at least a second satellite according to any one of the preceding claims, the main axes (**A**) of the main bodies (**2**) of the two satellites (**1**) being parallel, the interface mechanism (**8**) of the upper end surface (**6**) of the first satellite (**1**) being in contact along the main axes (**A**) with the interface mechanism (**7**) of the lower end surface (**5**) of the body (**2**) of the second satellite (**1**), the interface mechanisms (**7**, **8**) engaging with one another in order to firmly fix the two satellites (**1**) together.

10. Satellite stack (**1**) according to claim 9, in which the internal item of equipment (**10**) of the first satellite (**1**) extends partially into the inner space (**9**) of the second satellite (**1**).

11. Launch assembly comprising a launcher and at least one satellite (**1**) according to any one of claims 1 to 8, the launcher comprising a nosecone defining a housing for at least one satellite (**1**) and an interface ring (**20**), the lower end surface (**5**) of the main body (**2**) of the satellite (**1**) comprising an interface mechanism (**7**) in order to be firmly fixed to the interface ring (**20**) of the launcher.
